# EUROPÄISCHE PATENTSCHRIFT

(11) **EP 0 418 356 B1**
(45) Veröffentlichungstag und Bekanntmachung des Hinweises auf die Patenterteilung: **08.09.1993**
(21) Anmeldenummer: 90905182.3
(22) Anmeldetag: 02.04.1990
(51) Int. Cl.: G01N 1/14

(54) **VERFAHREN UND VORRICHTUNG ZUR PROBENNAHME AN EINER GRUNDWASSERMESSSTELLE**
PROCESS AND DEVICE FOR TAKING SAMPLES AT A GROUND WATER MEASUREMENT SITE
PROCEDE ET DISPOSITIF POUR PRELEVER DES ECHANTILLONS AU NIVEAU D'UN SITE DE MESURE D'UNE NAPPE D'EAU SOUTERRAINE

(30) Priorität: 07.04.1989 DE 3911366
(43) Veröffentlichungstag der Anmeldung: 27.03.1991
(73) Patentinhaber: GRUNDFOS INTERNATIONAL A/S, DK-8850 Bjerringbro (DK); PREUSSAG AKTIENGESELLSCHAFT, 30625 Hannover (DE)
(72) Erfinder: JENSEN, Niels, Due, DK-8850 Bjerringbro (DK); CHRISTENSEN, Jörgen, DK-8850 Bjerringbro (DK); GRIES, Konrad, D-3156 Hohenhameln (DE); JORDAN, Hans-Joachim, D-3150 Peine (DE)
(74) Vertreter: Haar, Lucas Heinz Jörn, Dipl.-Ing.
(86) Internationale Anmeldenummer: DE9000260
(87) Internationale Veröffentlichungsnummer: WO9012305

(56) Entgegenhaltungen:
- US-A- 4 489 779
- US-A- 4 683 761
- Patent Abstracts of Japan, vol. 4, No. 74 (P-13)(556), 30 May 1980, & JP-A-5540953

## Beschreibung

Die Erfindung betrifft ein Verfahren zur Probennahme an einer Grundwassermeßstelle unter Verwendung einer in die Bohrung der Grundwassermeßstelle absenkbaren Pumpe und eine Vorrichtung zur Durchführung des Verfahrens.

Vor allem in den Einzugsgebieten von Wassergewinnungsanlagen sind zahlreiche Grundwassermeßstellen, auch Grundwasser-Beobachtungsbrunnen genannt, vorgesehen. Sie dienen der Beobachtung des Grundwasserspiegels und der Entnahme von Wasserproben, deren Untersuchung über die Beschaffenheit und Reinheit des Grundwassers Aufschluß gibt. Die Grundwassermeßstellen bestehen in der Regel aus einer bis in die zu beobachtende, wasserführende Schicht abgetäuften Bohrung, in die eine Verrohrung mit einer Filterstrecke für den Zulauf des Grundwassers eingebaut ist. Durch die Verrohrung werden die Wasserproben mit einer pumpe gefördert, wobei die Pumpe bei Tiefen des Grundwasserspiegels unterhalb der maximalen Saughöhe in der Verrohrung abgesenkt werden muß. Die Förderleistung der Pumpen für die Probennahme wird, gemessen an dem meist nur geringen Durchmessern der Verrohrung der Meßstellen, so groß wie möglich gewählt, um vor der Probennahme in möglichst kurzer Zeit ein Freipumpen der Meßstelle, d. h. einen Austausch des in der Meßstelle angesammelten Grundwassers vornehmen zu können. Zur Gewinnung der Wasserprobe wird dann über einen Bypass die benötigte Probenmenge aus dem Förderstrom der Pumpe abgeleitet. Hierbei ergibt sich jedoch der Nachteil, daß die Probe durch den Einfluß der starken Förderung verfälscht werden kann. Werden Pumpen geringerer Leistung verwendet, so ist das der Probennahme vorangehende Klarpumpen der Meßstelle zu zeitaufwendig.

Vorrichtungen zur Probennahme an einer Grund = wassermeßstelle sind aus US-A- 4 489 779 und US-A- 4 683 761 bekannt.

Aufgabe der Erfindung ist es, ein Verfahren der eingangs genannten Art anzugeben, welches mit geringem Aufwand an Zeit und Material die Entnahme möglichst unverfälschter Grundwasserproben ermöglicht.

Zur Lösung dieser Aufgabe sieht das erfindungsgemäße Verfahren vor, daß die Pumpe zunächst mit einer hohen Drehzahl oder Frequenz zur Erzeugung einer an die Zuflußleistung der Grundwassermeßstelle angepaßten, großen Fördermenge und nach Klärung der Grundwassermeßstelle mit einer niedrigen Drehzahl oder Frequenz zur Förderung einer im wesentlichen unverfälschten Grundwasserprobe betrieben wird.

Das erfindungsgemäße Verfahren ermöglicht in einer ersten Phase ein Klarpumpen der Grundwassermeßstelle in kurzer Zeit, um so die Voraussetzungen für die Gewinnung einer unverfälschten Wasserprobe zu schaffen. In einer zweiten Phase erfolgt dann das Hochfördern der Wasserprobe ohne Änderung der installierten Einrichtungen mit einer so weit reduzierten Fördermenge, daß eine Veränderung des geförderten Wassers, beispielsweise durch Entgasung oder durch Mitreißen von Ablagerungen, vermieden wird.

Das erfindungsgemäße Verfahren sieht in einer vorteilhaften Ausgestaltung weiterhin vor, daß während der Klärungsphase ein für die Grundwasserbeschaffenheit charakteristischer Meßwert aufgenommen und überwacht wird und daß nach Feststellung einer vorgegebenen minimalen Schwankungsbreite dieses Meßwerts über eine vorgegebene Zeitdauer die Probenförderung eingeleitet wird. Auf diese Weise wird sichergestellt, daß die Phase des Klarpumpens nicht zu früh beendet oder nicht unnötig lang durchgeführt wird. Als charakteristischer Meßwert kann erfindungsgemäß die Leitfähigkeit des Grundwassers dienen.

Aufgabe der Erfindung ist weiterhin die Schaffung einer einfachen und kostengünstigen Vorrichtung zur Durchführung des erfindungsgemäßen Verfahrens. Die Vorrichtung weist ein in die Verrohrung der Grundwassermeßstelle einbaubares, elektrisch angetriebenes Pumpenaggregat auf, das durch einen außerhalb der Meßstelle befindlichen, regelbaren Frequenzumrichter in seiner Drehzahl steuerbar ist. Erfindungsgemäß ist hierbei vorgesehen, daß der Frequenzumrichter zusammen mit einer unabhängigen elektrischen Versorgungseinheit Teil einer mobilen Einheit zur Aufnahme und zum Transport von Wasserproben ist.

Mit der erfindungsgemäßen Vorrichtung lassen sich die beiden Betriebsphasen des erfindungsgemäßen Verfahrens optimal verwirklichen. So läßt sich die Drehzahl des frequenzgesteuerten Pumpenaggregats stufenlos an die jeweiligen Betriebsbedingungen anpassen. Die Fördermenge des Pumpenaggregats kann daher sowohl beim Klarpumpen der Meßstelle als auch beim Hochfördern der Wasserprobe auf die jeweils gegebenen örtlichen Bedingungen eingestellt werden. Das Pumpenaggregat läßt sich bei dieser aufgelösten Bauweise an den geringen Innendurchmesser der Verrohrung der Meßstellen anpassen und ermöglicht bei Rohrdurchmessern von 50 mm eine ausreichend hohe Förderleistung. Als Pumpe wird vorzugsweise eine Kreiselpumpe verwendet.

Das Pumpenaggregat kann entweder mit der mobilen Einheit mitgeführt und jeweils vor der Probennahme in die Meßstelle eingefahren werden, oder es kann nach einem weiteren Vorschlag der Erfindung jeweils ein fest eingebauter Bestandteil einer Grundwassermeßstelle sein. Bei einer Probennahme ist es dann lediglich erforderlich, das Pumpenaggregat an den Frequenzumrichter der mobilen Einheit anzuschließen und nach dem erfindungsgemäßen Verfahren zu betreiben. Der Zeitaufwand für das Ein- und Ausfahren des Pumpenaggregats und das Spülen des Pumpenaggregats und der Förderleitung zwischen den einzelnen Probennahmen kann dadurch entfallen.

Erfindungsgemäß weist die mobile Einheit auch eine Meßvorrichtung zur Erfassung und Überwachung eines für die Zusammensetzung des Grundwassers charakteristischen Meßwerts auf.

Die erfindungsgemäße Vorrichtung eignet sich ferner zur Ausrüstung stationärer Meßwarten mit zwei oder mehr Grundwassermeßstellen. Erfindungsgemäß ist hierbei vorgesehen, daß jede Grundwassermeßstelle mit einem Pumpenaggregat ausgerüstet ist und daß ein Frequenzumrichter wahlweise jeweils an eines der Pumpenaggregate schaltbar ist. Auf diese Weise lassen sich mit geringem baulichen Aufwand von einer Meßwarte aus an mehreren Grundwassermeßstellen eine Probennahme durchführen.

Zur Vereinfachung der erfindungsgemäßen Vorrichtung und zur Erleichterung ihrer Handhabung und ihrer Montage kann nach einem weiteren Vorschlag der Erfindung vorgesehen sein, daß die elektrischen Verbindungsleitungen zwischen Pumpenaggregat und Frequenzumrichter in einem an die Förderleitung des Pumpenaggregats angeformten separaten Kanal geführt sind. Die Förderleitung besteht dabei zweckmäßig aus einem gegenüber dem Grundwasser und seinen Inhaltsstoffen chemisch neutralen Werkstoff, vorzugsweise aus Polytetrafluoräthylen.

Verlaufen die elektrischen Verbindungsleitungen zwischen Pumpenaggregat und Frequenzumrichter frei in der Verrohrung der Grundwassermeßstelle, so sind sie erfindungsgemäß mit einer Ummantelung aus einem gegenüber dem Wasser und seinen Inhaltsstoffen chemisch neutralen Werkstoff, insbesondere aus Polytetrafluoräthylen, versehen.

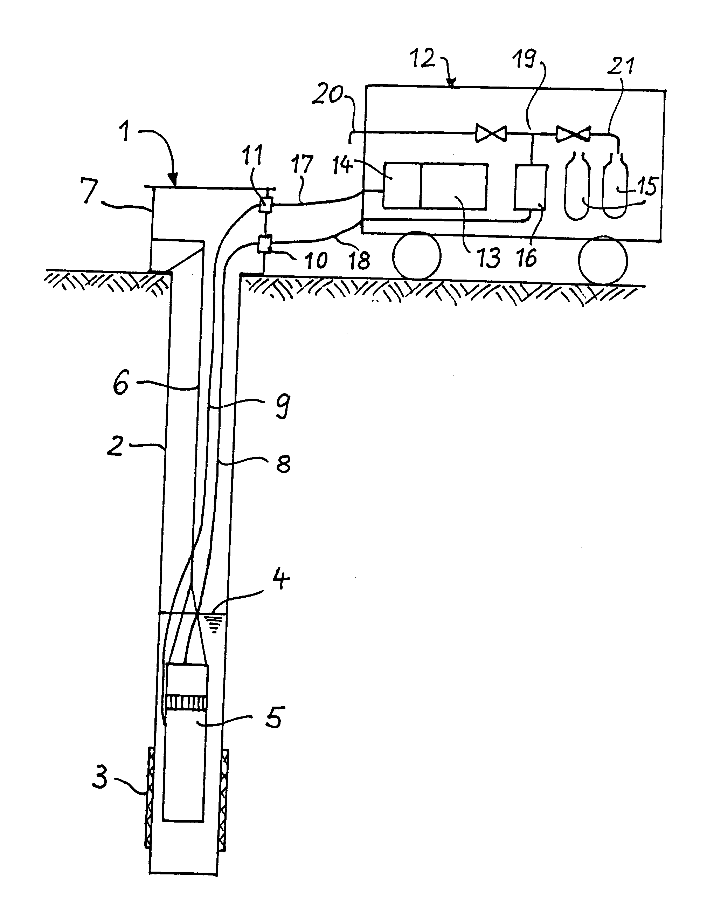

Die Erfindung wird nachfolgend anhand eines Ausführungsbeispiels, das in der Zeichnung dargestellt ist, näher erläutert. Die Zeichnung zeigt eine schematische Ansicht einer erfindungsgemäßen Vorrichtung im Einsatz an einer Grundwassermeßstelle.

Die dargestellte Grundwassermeßstelle 1 ist mit einer Verrohrung 2 ausgekleidet, die am unteren Ende einen Filter 3 aufweist, durch den das Grundwasser in das Innere der Verrohrung 2 eindringen kann. In der Verrohrung 2 befindet sich unterhalb des Grundwasserspiegels 4 ein Tauchpumpenaggregat 5, das mit einem Seil 6 im Kopf 7 der Grundwassermeßstelle 1 abgehängt ist. Das Pumpenaggregat 5 enthält eine zweistufige Kreiselpumpe, die von einem elektrischen Asynchron-Kurzschlußläufer-Motor angetrieben wird. Von dem Pumpenaggregat 5 führen eine Förderleitung 8 und elektrische Anschlußleitungen 9 zum Kopf 7, wo das Ende der Förderleitung 8 mit einer Anschlußarmatur 10 und die Enden der Anschlußleitungen 9 mit einer Steckkupplung 11 verbunden sind.

Dem Kopf 7 der Grundwassermeßstelle 1 benachbart ist ein Fahrzeug 12, das einen von einem Verbrennungsmotor angetriebenen Generator 13, ein an den Generator 13 angeschlossenen, regelbaren Frequenzumrichter 14, Behälter 15 zur Aufnahme von Wasserproben und eine Meßvorrichtung 16 enthält. Der Frequenzumrichter 14 ist mit Anschlußleitungen 17 an der Steckkupplung 11 lösbar mit den Anschlußleitungen 9 verbunden. An die Anschlußarmatur 10 ist eine Leitung 18 angeschlossen, die über die Meßvorrichtung 16 zu einem Verteiler 19 führt, durch den das geförderte Wasser entweder über eine Abflußleitung 20 abgeführt oder über eine Abfülleitung 21 in die Probenbehälter 15 gefüllt werden kann.

Mit der beschriebenen Einrichtung lassen sich auf einfache und rationelle Weise nach dem erfindungsgemäßen Verfahren Wasserproben gewinnen. Das Fahrzeug wird wie dargestellt an einer Grundwassermeßstelle 1 abgestellt und mit den Leitungen 17, 18 an den Kopf 7 angeschlossen. Nach Starten des Generators 13 wird über den Frequenzumrichter 14 das Pumpenaggregat mit hoher Frequenz angesteuert und die Grundwassermeßstelle mit großer Förderleistung klargepumpt. Hierbei wird über die Meßvorrichtung 16 die elektrische Leitfähigkeit des geförderten Wassers beobachtet, um Veränderungen der Grundwasserbeschaffenheit während des Klarpumpens feststellen zu können. Bleibt die gemessene Leitfähigkeit über einen vorgegebenen Zeitraum konstant bzw. innerhalb einer bestimmten Schwankungsbreite, so wird das Klarpumpen beendet. Während des Klarpumpens wird das Wasser über die Abflußleitung 20 abgeleitet.

Für die Entnahme der Wasserproben wird die Frequenz der Speisespannung für das Pumpenaggregat so weit reduziert, daß die Fördermenge auf einen Liter pro Minute oder noch darunter absinkt. Erreicht das mit derart geringer Leistung geförderte Wasser schließlich den Verteiler 18, so wird die Abflußleitung 20 geschlossen und über die Abfülleitung 21 werden Probenbehälter 15 gefüllt. Nach Beendigung des Füllvorgangs werden die Leitungen 17, 18 gelöst, worauf das Fahrzeug 12 zu einer erneuten Probennahme an eine andere Grundwassermeßstelle gebracht werden kann.

## Patentansprüche

1. Verfahren zur Probennahme an einer Grundwassermeßstelle unter Verwendung einer in die Bohrung der Grundwassermeßstelle absenkbaren Pumpe, dadurch gekennzeichnet, daß die Pumpe zunächst mit einer hohen Drehzahl oder Frequenz zur Erzeugung einer an die Zuflußleistung der Grundwassermeßstelle angepaßten, großen Fördermenge und nach Klärung der Grundwassermeßstelle mit einer niedrigen Drehzahl oder Frequenz zur Förderung einer im wesentlichen unverfälschten Grundwasserprobe betrieben wird.

2. Verfahren nach Anspruch 1, dadurch gekennzeichnet, daß während der Klärungsphase ein für die Grundwasserbeschaffenheit charakteristischer Meßwert aufgenommen und überwacht wird, und daß nach Feststellung einer vorgegebenen minimalen Schwankungsbreite dieses Meßwerts während einer vorgegebenen Zeitdauer die Probenförderung eingeleitet wird.

3. Verfahren nach Anspruch 2, dadurch gekennzeichnet, daß als charakteristischer Meßwert die elektrische Leitfähigkeit des Wassers gemessen und überwacht wird.

4. Vorrichtung zur Durchführung des Verfahrens nach einem der vorhergehenden Ansprüche, gekennzeichnet durch ein in eine Verrohrung (2) der Grundwassermeßstelle (1) einbaubares, elektrisch angetriebenes Pumpenaggregat (5), das durch einen außerhalb der Meßstelle (1) befindlichen, regelbaren Frequenzumrichter (14) in seiner Drehzahl steuerbar ist, wobei der Frequenzumrichter (14) zusammen mit einer unabhängigen elektrischen Versorgungseinheit (13) Teil einer mobilen Einheit (12) zur Aufnahme und zum Transport von Wasserproben ist.

5. Vorrichtung nach Anspruch 4, dadurch gekennzeichnet, daß das Pumpenaggregat (5) ein fest eingebauter Bestandteil einer Grundwassermeßstelle (1) ist.

6. Vorrichtung nach einem der Ansprüche 4 oder 5, dadurch gekennzeichnet, daß die unabhängige elektrische Versorgungseinheit (13) ein von einem Verbrennungsmotor angetriebenes Stromaggregat ist.

7. Vorrichtung nach einem der vorhergehenden Ansprüche 4 - 6, dadurch gekennzeichnet, daß die mobile Einheit (12) eine Meßvorrichtung (16) zur Erfassung und Überwachung eines für die Beschaffenheit des Grundwassers charakteristischen Meßwerts umfaßt.

8. Vorrichtung zur Durchführung des Verfahrens nach einem der Ansprüche 1 bis 3 für eine stationäre Meßwarte mit wenigstens zwei Grundwassermeßstellen, dadurch gekennzeichnet, daß jede Grundwassermeßstelle mit einem elektrisch angetriebenen Pumpenaggregat ausgerüstet ist, das durch einen außerhalb der Meßstelle befindlichen, regelbaren Frequenzumrichter in seiner Drehzahl steuerbar ist, und daß der Frequenzumrichter wahlweise jeweils an eines der Pumpenaggregate schaltbar ist.

9. Vorrichtung nach einem der vorhergehenden Ansprüche, dadurch gekennzeichnet, daß elektrische Verbindungsleitungen (9) zwischen Pumpenaggregat (5) und Frequenzumrichter (14) in einem an eine Förderleitung (8) des Pumpenaggregats angeformten, separaten Kanal geführt sind.

10. Vorrichtung nach einem der vorhergehenden Ansprüche, dadurch gekennzeichnet, daß die Förderleitung (8) des Pumpenaggregats (5) aus einem gegenüber dem Grundwasser und seinen Inhaltsstoffen chemisch neutralen Werkstoff, vorzugsweise aus Polytetrafluoräthylen, besteht.

11. Vorrichtung nach einem der vorhergehenden Ansprüche 4 - 8, dadurch gekennzeichnet, daß zwischen Pumpenaggregat (5) und Frequenzumrichter (14) frei in der Verrohrung (2) der Grundwassermeßstelle (1) verlaufende, elektrische Verbindungsleitungen (9) mit einer Ummantelung aus einem gegenüber dem Grundwasser und seinen Inhaltsstoffen chemisch neutralen Werkstoff, insbesondere aus Polytetrafluoräthylen, versehen sind.

## Claims

1. A method for taking samples from a groundwater measuring point, using a pump which may be sunk into the borehole of the groundwater measuring point, characterised in that the pump is operated initially at a high rotational speed or frequency to create a flow rate which is adapted to the inflow rate of the groundwater measuring point, and, following clarification, is subsequently operated at a low rotational speed or frequency to yield a groundwater sample which is, for the most part, a true reflection of the actual conditions.

2. A method according to Claim 1, characterised in that a measured value which is characteristic for the groundwater quality is recorded and monitored during the clarification phase and that removal of the sample is initiated following establishment of a pre-defined minimum level of variation of this measured value over a pre-defined period of time.

3. A method according to Claim 2, characterised in that the electric conductivity of the water is measured and monitored as the characteristic measured value.

4. Apparatus for carrying out the method according to one of the preceding claims, characterised in that the rotational speed of an electrically-driven pump unit (5) which is incorporated within a pipe (2) of the groundwater measuring point (1) is controllable through an adjustable frequency converter (14), and the frequency converter (14), together with an independent electrical supply unit (13), forms part of a mobile unit (12) to remove and transport water samples.

5. Apparatus according to Claim 4, characterised in that the pump unit (5) forms a fixed integral part of a groundwater measuring point (1).

6. Apparatus according to either Claim 4 or 5, characterised in that the independent electrical supply unit (13) is a current supply unit driven by an internal combustion engine.

7. Apparatus according to any one of Claims 4 to 6, characterised in that the mobile unit (12) comprises a measuring device (16) to record and monitor a measured value which is characteristic for the quality of the groundwater.

8. Apparatus for carrying out the method according to any one of Claims 1 to 3 for a stationary measuring station with at least two groundwater measuring points, characterised in that each groundwater measuring point is provided with an electrically-driven pump unit the rotational speed of which is controllable by an adjustable frequency converter (14) which lies outside of the measuring point, and that the frequency converter may be switched to either one of the pump units at will.

9. Apparatus according to any one of the preceding Claims, characterised in that electrical connecting lines (9) between the pump unit (5) and frequency converter (14) are laid within a separate duct moulded onto one delivery pipe (8) of the pump unit.

10. Apparatus according to any one of the preceding Claims, characterised in that the delivery pipe (8) of the pump unit (5) is constructed of a material which is chemically neutral towards the groundwater and its contents and is preferentially polytetrafluoroethylene.

11. Apparatus according to any one of Claims 4 to 8, characterised in that electrical connecting lines (9) are provided between the pump unit (5) and the frequency converter (14) free in the pipe (2) of the groundwater measuring point (1), and are sheathed within a material which is chemically neutral towards the groundwater and its contents and is preferentially polytetrafluoroethylene.

## Revendications

1. Procédé pour prélever des échantillons en un site de mesure d'une nappe d'eau souterraine moyennant l'utilisation d'une pompe, qui peut être abaissée à l'intérieur du forage de l'emplacement de mesure de la nappe d'eau souterraine, caractérisé en ce qu'on fait fonctionner tout d'abord la pompe avec une vitesse de rotation ou une fréquence élevée pour produire un débit de refoulement élevé, qui est adapté à la capacité d'afflux du site de mesure de la nappe d'eau souterraine et qu'après clarification au niveau du site de mesure de la nappe d'eau souterraine, on fait fonctionner la pompe avec une faible vitesse de rotation ou une faible fréquence pour refouler un échantillon de la nappe d'eau souterraine substantiellement non altéré.

2. Procédé selon la revendication 1, caractérisé en ce que pendant la phase de clarification, on enregistre et on contrôle une valeur de mesure caractéristique de l'état de la nappe d'eau souterraine, et qu'après détermination d'une amplitude minimale prédéterminée de variation de cette valeur de mesure, on déclenche le refoulement de l'échantillon pendant une durée prédéterminée.

3. Procédé selon la revendication 2, caractérisé en ce qu'on mesure et on contrôle comme valeur de mesure caractéristique, la conductivité électrique de l'eau.

4. Dispositif pour la mise en oeuvre du procédé selon l'une des revendications précédentes, caractérisé par un groupe moto-pompe (5), qui est entraîné électriquement, peut être incorporé dans un tubage (2) du site de mesure (1) de la nappe d'eau souterraine et dont la vitesse de rotation peut être commandée au moyen d'un convertisseur de fréquence réglable (14), qui est situé à l'extérieur du site de mesure (1), le convertisseur de fréquence (14) faisant partie, conjointement avec une unité d'alimentation électrique indépendante (13), d'une unité mobile (12) pour la réception et le transport d'échantillons d'eau.

5. Dispositif selon la revendication 4, caractérisé en ce que le groupe moto-pompe (5) est un composant incorporé de façon fixe d'un site de mesure (1) de la nappe d'eau souterraine.

6. Dispositif selon l'une des revendications 4 ou 5, caractérisé en ce que l'unité d'alimentation électrique indépendante (13) est une unité d'alimentation en courant entraînée par un moteur à combustion interne.

7. Dispositif selon l'une des revendications précédentes 4-6, caractérisé en ce que l'unité mobile (12) comprend un dispositif de mesure (16) servant à détecter et contrôler une valeur de mesure caractéristique de l'état de la nappe d'eau souterraine.

8. Dispositif pour la mise en oeuvre du procédé selon l'une des revendications 1 à 3, pour un poste de mesure stationnaire comportant au moins deux sites de mesure de la nappe d'eau souterraine, caractérisé en ce que chaque site de mesure de la nappe d'eau souterraine est équipé d'un groupe moto-pompe entraîné électriquement, dont la vitesse de rotation peut être commandée par un convertisseur réglable de fréquence, situé à l'extérieur du site de mesure, et que le convertisseur de fréquence peut être commuté au choix respectivement sur l'un des groupes moto-pompe.

9. Dispositif selon l'une des revendications précédentes, caractérisé en ce que des conducteurs électriques de liaison (9) s'étendent entre le groupe moto-pompe (5) et le convertisseur de fréquence (14), dans un canal séparé, qui est conformé à une conduite de refoulement (8) du groupe moto-pompe.

10. Dispositif selon l'une des revendications précédentes, caractérisé en ce que la conduite de refoulement (8) du groupe moto-pompe (5) est constituée en un matériau chimiquement neutre vis-à-vis de l'eau de la nappe d'eau souterraine et des substances qu'elle contient, de préférence en polytétrafluoréthylène.

11. Dispositif selon l'une des revendications précédentes 4-8, caractérisé en ce que des conducteurs électriques de liaison (9), qui s'étendent entre le groupe moto-pompe (5) et le convertisseur de fréquence (14), libres dans le tubage (2) du site de mesure (1) de la nappe d'eau souterraine, sont pourvus d'une gaine réalisée en un matériau chimiquement neutre vis-à-vis de l'eau de la nappe d'eau souterraine et des substances qu'elle contient, notamment en polytétrafluoréthylène.
